# EUROPÄISCHE PATENTSCHRIFT

(11) **EP 2 664 087 B1**
(45) Veröffentlichungstag und Bekanntmachung des Hinweises auf die Patenterteilung: **30.09.2015**
(21) Anmeldenummer: 11702792.0
(22) Anmeldetag: 28.01.2011
(51) Int. Cl.: H04J 3/06, H04J 3/16, H04L 7/08

(54) **VERFAHREN ZUR TAKTSYNCHRONISATION EINER MEHRZAHL VON BAUGRUPPEN**
METHOD FOR CLOCK SYNCHRONIZATION OF A PLURALITY OF MODULES
PROCÉDÉ DE SYNCHRONISATION D'HORLOGE D'UNE PLURALITÉ DE MODULES

(30) Priorität: 11.01.2011 EP 11000151
(43) Veröffentlichungstag der Anmeldung: 20.11.2013
(73) Patentinhaber: Unify GmbH & Co. KG, 81379 München (DE)
(72) Erfinder: LINDNER, Thomas, 81379 Muenchen (DE)
(74) Vertreter: Fritzsche, Thomas
(86) Internationale Anmeldenummer: PCT/EP2011/000409
(87) Internationale Veröffentlichungsnummer: WO 2012/095120

(56) Entgegenhaltungen:
- US-B1- 7 103 124

## Beschreibung

Die Erfindung betrifft ein Verfahren zur Taktsynchronisation einer Mehrzahl von verteilten, über ein paketvermitteltes Netzwerk gekoppelten Baugruppen eines informationstechnischen oder kommunikationstechnischen Systems.

Beispielsweise in der Informationstechnik oder Kommunikationstechnik, und hier insbesondere bei der Realisierung von analogen oder digitalen TelekommunikationsSchnittstellen-Gateways, eine Mehrzahl von verteilten, über ein paketvermitteltes Netzwerk gekoppelten Baugruppen, insbesondere softwaregesteuerten Peripherie-Baugruppen, die beispielsweise über ein Standard-LAN gekoppelt sind, in ihrem Takt zu synchronisieren. Bekannte Lösungen sehen vor, dass sämtliche Peripherie-Baugruppen eines Baugruppenrahmens über spezielle Taktsignale mithilfe einer speziellen Hardware mit einem zentralen Taktgenerator verbunden werden. Demgegenüber verzichten bekannte auf Software basierende Lösungen entweder vollständig auf eine Synchronisation, oder sie basieren auf dem standardisierten PTP-Protokoll gemäß IEEE 1588, dass ebenfalls spezielle Hardwarekomponenten zur Vergabe hoch genauer Zeitstempel benötigt.

US 7,103,124 B1 offenbart ein Taktsynchronisationsverfahren gemäß dem Oberbegriff des Anspruchs 1.

Der vorliegenden Erfindung liegt die Aufgabe zu Grunde, eine technische Lehre zur Taktsynchronisation einer Mehrzahl von verteilten, über ein paketvermitteltes Netzwerk gekoppelten Baugruppen eines informationstechnischen oder kommunikationstechnischen Systems anzugeben, welche mögliche Nachteile oder Beschränkungen bekannter Lösungen nach Möglichkeit vermeidet oder überwindet. Diese Aufgabe wird durch ein Verfahren oder eine Anordnung nach einem der unabhängigen Patentansprüche gelöst.

Erfindungsgemäß ist ein Verfahren zur Taktsynchronisation einer Mehrzahl von verteilten, über ein paketvermitteltes Netzwerk gekoppelten Baugruppen eines informationstechnischen oder kommunikationstechnischen Systems oder eine entsprechende Anordnung vorgesehen, bei dem bzw. bei der wenigstens zwei dieser Baugruppen von einem lokalen Taktgenerator dieser Baugruppe mit einer einstellbaren Frequenz gesteuert werden und ein Taktsignal über das Netzwerk in Form von Taktsignal-Paketen synchron zu ihrem lokalen Takt senden, wobei das Taktsignal wenigstens ein Puls-Code-Modulations-Signal umfasst, welches in Form von Paketen synchron zum Takt des Puls-Code-Modulations-Signals über das Netzwerk gesendet wird. Eine dieser wenigstens zwei Baugruppen übernimmt dabei die Funktion einer Master-Baugruppe, auf deren Takt alle übrigen dieser wenigstens zwei Baugruppen, die Slave-Baugruppe(n), ihren lokalen Takt synchronisieren, indem sie ein Maß für die Abweichung ihres lokalen Taktgenerators relativ zu dem Taktgenerator der Master-Baugruppe durch einen Vergleich des durch die Master-Baugruppe ausgesendeten Taktsignals mit ihrem eigenen Taktsignal ermitteln und zur Regelung ihres lokalen Taktgenerators verwenden, vorzugsweise, indem sie dieses Maß für die Abweichung ihres lokalen Taktgenerators relativ zu dem Taktgenerator der Master-Baugruppe verkleinern oder minimieren. Erfindungsgemäß sendet jede einzelne dieser wenigstens zwei Baugruppen ihre Taktsignal-Pakete in einem Zeitfenster aus, das verschieden ist von dem Zeitfenster aller anderen dieser wenigstens zwei Baugruppen.

Unter einer Baugruppe eines informationstechnischen oder kommunikationstechnischen Systems ist in diesem Zusammenhang eine baulich abgrenzbare Funktionseinheit eines informationstechnischen oder kommunikationstechnischen Systems zu verstehen, insbesondere eine Peripheriebaugruppe zur Realisierung analoger und digitaler Telekommunikationsschnittstellen. Unter einem informationstechnischen oder kommunikationstechnischen Systems in diesem Zusammenhang jedes System zu verstehen, mit dem informationstechnischen oder kommunikationstechnischen Dienste realisiert werden können. Wichtige Beispiele für solche Systeme sind Telekommunikationsanlagen, insbesondere Telefonanlagen.

Vorzugsweise verwenden diese Telekommunikationsanlagen das Verfahren der Pulse-Code Modulation (PCM), um analoge Signale, beispielsweise Sprache oder Video, in digitale Signale umzusetzen (http://en.wikipedia.org/wiki/PCM).

Beim PCM Verfahren wird ein kontinuierlicher digitaler Datenstrom erzeugt, der das analoge Signal repräsentiert. Dazu wird das zeit- und wertkontinuierliche analoge Signal in ein zeit- und wertdiskretes digitales Signal umgesetzt.

Zur Übertragung auf digitaler Seite wird vorzugsweise das Time-Division Multiplex (TDM) Verfahren angewandt (http://en.wikipedia.org/wiki/Time-division_multiplexing). Hierbei werden die seriellen Datenströme mehrerer Kommunikationskanäle durch ein Multiplex Verfahren zusammengefasst. Dies geschieht vorzugsweise mit Hilfe einer Rahmenstruktur. Werden beispielsweise 32 Kanäle innerhalb eines seriellen Datenstromes übertragen, so geschieht dies in 32 Zeitschlitzen, die sequentiell aufeinander folgen. Diese 32 Zeitschlitze bilden dann einen PCM Rahmen. Ein typisches Beispiel wären 32 Kanäle in einer Auflösung von 8 Bit und einer Abtastrate von 8000 Hz, woraus sich eine Bitrate von jeweils 64 kbit/s sowie eine Summenbitrate von 32 x 64 kbit/s = 2,048 Mbit/s ergibt. Der PCM Rahmen wiederholt sich hierbei alle 125 µs, was einem PCM Rahmentakt von 8 kHz entspricht. Der PCM Übertragungstakt entspricht vorzugsweise der Summenbitrate, also 2,048 MHz im diesem Beispiel. Diese Takte sind zueinander synchron; damit wäre es beispielsweise auch möglich, den Übertragungstakt aus dem Rahmentakt zu erzeugen. Die Bereitstellung der PCM Takte wird vorzugsweise von einem Taktgenerator übernommen.

Eine störungsfreie Übertragung solcher PCM/TDM Signale, z.B. von einer räumlich abgegrenzten Funktionseinheit zu einer anderen, setzt eine Synchronizität der PCM Taktsignale voraus. Ist diese nicht gewährleistet, spricht man von Bitschlupf. Ist der PCM Takt einer Funktionseinheit A höher als der einer anderen Funktionseinheit B, dann werden bei der Übertragung von A nach B einzelne Bits verworfen werden, was zum Überspringen einzelner Abtastwerte führt. In der Gegenrichtung kommen bei A weniger Abtastwerte an, als dort benötigt werden; typischerweise versucht man, die fehlenden Werte durch Interpolation zu kaschieren. Solche Störungen können sich bei Sprachsignalen typischerweise als Knacken bemerkbar machen, bei Faxübertragungen können sie zu Abbrüchen und bei Datenübertragungen zu einer Absenkung des Datendurchsatzes führen.

Unter einem Taktgenerator ist in diesem Zusammenhang eine Funktionseinheit zu verstehen, die zur Erzeugung eines Taktsignales eingerichtet ist. Unter einem lokalen Taktgenerator einer Baugruppe ist ein Taktgenerator zu verstehen, der dieser Baugruppe funktional zugeordnet ist, also den Takt für diese Baugruppe erzeugt. Ein solcher lokaler Taktgenerator wird vorzugsweise mit einer über eine Software, also ein Programm, einstellbaren Frequenz betrieben. Unter einem Taktgenerator, Taktsignalgenerator oder Taktgeber versteht man ein Bauteil, das ein Taktsignal erzeugt, also vorzugsweise Impulse in einer bestimmten Frequenz abgibt. Es kann sich dabei sowohl um mechanische, elektrische, als auch elektronische Bauteile oder Baugruppen handeln, die unter anderem für Datenverarbeitung und Synchronisation erforderlich sind. Ein Taktgeber tritt häufig mit Hilfe eines Steuerwerks in einem Rechenwerk auf. Ein Taktgeber taktet in einem elektronischen Rechenwerk vorzugsweise die Rechenschritte.

Ein Taktgeber ist in vielen Fällen eine Kippschaltung oder ein Oszillator. Vorzugsweise werden hierfür digital gesteuerte Oszillatoren verwendet. Ein digital gesteuerter Oszillator oder Digitally Controlled Oscillator (DCO) oder auch numerisch gesteuerter Oszillator ist eine elektronische Schaltung oder ein elektronisches Bauelement, welches vorzugsweise basierend auf dem Verfahren der direkten digitale Synthese (DDS), eine Schwingung erzeugt, deren Frequenz vorzugsweise direkt über einen Zahlenwert eingestellt wird, der vorzugsweise über ein Programm ermittelt wird. Dadurch erhält man eine sehr genau eingestellte Frequenz, welche (im Rahmen der Spezifikationen des Bauteils bzw. der Komponenten der Schaltung) konstant bleibt.

Unter einem paketvermittelten Netzwerk ist in diesem Zusammenhang ein Netzwerk zu verstehen, indem Information über so genannte Pakete übertragen wird. Beispiele für solche paketvermittelten Netzwerken sind Computernetze, insbesondere lokale Computernetze, also so genannte LANs, aber auch so genannte Wide Area Networks und das Internet.

In diesem Zusammenhang ist unter einer Master-Baugruppe eine Baugruppe zu verstehen, auf deren Takt alle übrigen Baugruppen, die so genannten Slave-Baugruppen, ihren lokalen Takt synchronisieren. Dies geschieht vorzugsweise dadurch, dass die Slave-Baugruppen ein Maß für die Abweichung ihres lokalen Taktgenerators relativ zu dem Taktgenerator der Master-Baugruppe durch einen Vergleich des durch die Master-Baugruppe ausgesendeten Taktsignals mit ihrem eigenen Taktsignal erz mitteln und zur Regelung ihres lokalen Taktgenerators verwenden.

Gemäß der Erfindung, wie bereits erwähnt, ist ein Verfahren oder eine Anordnung vorgesehen, bei dem jede einzelne dieser wenigstens zwei Baugruppen ihre Taktsignal-Pakete in einem Zeitfenster aussendet, das verschieden ist von dem Zeitfenster aller anderen dieser wenigstens zwei Baugruppen. Auf diese Weise ist es möglich, die über das Netzwerk zu übertragenden Taktsignal-Pakete zeitlich so zu positionieren, dass sonst unvermeidliche stochastische Verzögerungen, insbesondere durch die endliche Verarbeitungsgeschwindigkeit von Netzwerkkomponenten wie Switches oder Routern, gar nicht erst entstehen können. Hierdurch entfällt die Notwendigkeit, aufwändige Verfahren, wie beispielsweise in der IEEE 1588 spezifiziert sind, anwenden zu müssen.

Dies bedeutet insbesondere, dass zum Aufbau erfindungsgemäß ausgestatteter Netze auf Standardhardware und Softwarekomponenten in den Netzwerkschnittstellen zurückgegriffen werden kann, was bedeutende Kostenvorteile mit sich bringt. Durch das erfindungsgemäße Verfahren ist bei geeigneter Wahl der Ausführungsformen eine Genauigkeit im Bereich von 2-5 µs zu erreichen, was weit unter der Länge eines PCM Rahmens mit einer typischen Länge von 125 µs liegt. Bitschlupf kann somit weit gehend ausgeschlossen werden.

Gemäß einer weiteren bevorzugten Ausführungsform der Erfindung, deren Merkmale auch mit Merkmalen anderer Ausführungsformen kombiniert werden können, ist es vorgesehen, dass jeder Baugruppe eine lokale Steuereinheit zugeordnet ist, die über das Netzwerk mit einem zentralen Steuerrechner verbunden ist.

Gemäß einer weiteren bevorzugten Ausführungsform der Erfindung, deren Merkmale auch mit Merkmalen anderer Ausführungsformen kombiniert werden können, ist es vorgesehen, dass jede lokale Steuereinheit einen Quarzoszillator mit einstellbarer Frequenz aufweist, welcher vorzugsweise von einem Programm über einen Digital-Analog-Wandler gesteuert wird.

Ein Quarzoszillator ist eine elektronische Schaltung zum Erzeugen von Schwingungen, die sich eines Schwingquarzes als frequenzbestimmendes Bauelement bedient. Im engeren Sinne ist ein Quarzoszillator eine fertig aufgebaute Oszillatorschaltung, die zusammen mit dem frequenzbestimmenden Quarz in einem Gehäuse eingebaut ist und als Standardbauteil erhältlich ist. Quarzoszillatoren sind in ihrer Frequenz (Anzahl der Schwingungen pro Zeiteinheit) sehr genau und haben Abweichungen von typisch unter 100 ppm. Andere einfache Oszillatorschaltungen, z. B. solche mit LC-Schwingkreisen, sind wesentlich ungenauer mit Abweichungen von der Nennfrequenz mit mehr als 1 % (10.000 ppm). In der Praxis ist der Quarzoszillator oft als Taktgeber für Prozessoren, Mikrocontroller, Funkgeräten und in Uhren zu finden. Zunehmend werden Quarzoszillatoren jedoch durch preisgünstigere Keramik-Resonatoren ersetzt.

Die in Quarzoszillator-Schaltungen verwendeten Schwingquarze sind meist Kristallplättchen, -stäbe oder -gabeln (wie eine Stimmgabel), die durch elektrische Spannung zu mechanischen Formänderungen gebracht werden können, die wiederum eine elektrische Spannung erzeugen. Die Reaktion ist durch die mechanischen Schwingungsmodi des piezoelektrischen Körpers (Schwingquarz oder auch ein Keramikschwinger) gegeben.

Ein Schwingquarz wird bei einer Wechselspannung bestimmter Frequenz zu besonders starken Resonanzschwingungen angeregt (diese Eigenschaft besitzen auch piezoelektrische Schallgeber). Diese Frequenz wird als Resonanzfrequenz bezeichnet. Sie ist bei geeignetem Kristallschnitt fast unabhängig von Umgebungseinflüssen wie Temperatur oder Amplitude und kann deshalb als präziser Taktgeber verwendet werden (Langzeitstabilität besser als 0,0001 %). Schwingende Quarzplatten können in folgenden elektrisch/mechanischen Modi betrieben werden:
Bei der Serienresonanz ist ihr scheinbarer Widerstand für den Wechselstrom besonders gering und sie verhalten sich wie eine Serienschaltung aus einer Spule und einem Kondensator.

Bei der Parallelresonanz ist ihr scheinbarer Widerstand hierbei besonders groß. Dann verhalten sie sich wie eine Parallelschaltung von Kondensator und Spule mit der Besonderheit, dass kein Gleichstrom fließen kann (Quarz ist ein sehr guter Isolator). Diese Parallelresonanz liegt etwa 0,1% höher als die Serienresonanz und kann durch einen parallelgeschalteten kleinen Kondensator geringfügig geändert werden (sog. Ziehen des Quarzes).

Eine im Zusammenhang mit der vorliegenden Erfindung bevorzugte Art von Oszillatoren bilden Oszillatoren mit per Spannung steuerbarer ("ziehbarer") Frequenz (VCXO - Voltage Controlled Crystal Oscillator). Dabei kann die Frequenz meist nur in der Größenordnung von 100 ppm verändert werden. Typische Anwendung von VCXOs sind steuerbare Oszillatoren in Phasen-Regelschleifen.

Ein frequenzvariabler Oszillator oder Quarzoszillator mit einstellbarer Frequenz, kurz VXO, ist ein Quarzoszillator, der in seiner Frequenz verändert werden kann. Ist der Quarzoszillator durch elektrische Spannung trimmbar, wird er VCXO (engl. voltage controlled crystal oscillator, Quarz-Oszillator mit über Spannung trimmbarer Frequenz) genannt. Die Regelspannung wird vorzugsweise über einen Digital-Analog-Umsetzer (Digital-Analog-Wandler) erzeugt.

Ein Digital-Analog-Umsetzer (DAU, engl. digital-to-analog converter (DAC)), auch Digital-Analog-Wandler oder D/A-Wandler genannt, wird verwendet, um quantisierte digitale Signale oder einzelne Werte in analoge Signale umzusetzen. Quelle der Signale sind dabei der Analog-Digital-Umsetzer und/oder digitale Information oder Berechnung. In der Regel wird der DAU als Integrierter Schaltkreis (IC) ausgeführt (http://de.wikipedia.org/wiki/Digital-Analog-Wandler).

Gemäß der Erfindung, wie bereits erwähnt, ist es vorgesehen, dass das Taktsignal wenigstens ein Puls-Code-Modulation-Signal, typischerweise den PCM-Rahmentakt, umfasst, welches in Form von Paketen, vorzugsweise nach dem Real-Time-Transport-Protokoll, synchron zum Takt des Puls-Code-Modulation-Signals über das Netzwerk gesendet wird.

Das Real-Time Transport Protocol (RTP) ist ein Protokoll zur kontinuierlichen Übertragung von audiovisuellen Daten (Streams) über IP-basierte Netzwerke (http://de.wikipedia.org/wiki/Real-Time_Transport_Protocol). Das Protokoll wurde erstmals 1996 im RFC 1889 standardisiert. 2003 wurde ein überarbeiteter RFC veröffentlicht. Der RFC 3550 löst damit den RFC 1889 ab. Es dient dazu, Multimedia-Datenströme (Audio, Video, Text, etc.) über Netzwerke zu transportieren, d.h. die Daten zu kodieren, zu paketieren und zu versenden. RTP ist ein Paket-basiertes Protokoll und wird normalerweise über UDP betrieben.

RTP kann sowohl für Unicast-Verbindungen als auch für Multicast-Kommunikation im Internet eingesetzt werden. Das Real Time Control Protocol arbeitet mit RTP zusammen und dient der Aushandlung und Einhaltung von Quality-of-Service-Parametern (QoS). Es findet Anwendung in vielen Bereichen, u.a. wird es bei den IP-Telefonie-Technologien H.323 und SIP dazu verwendet, die Audio-/Videoströme des Gespräches zu übertragen. Die Funktion von RTP besteht hauptsächlich in der Übertragung echtzeitsensitiver Datenströme, während das Real-Time Streaming Protocol (RTSP) der Steuerung und Kontrolle der Datenübertragung dient. Das Datagram Congestion Control Protocol (DCCP) ist ein aktueller Ansatz, um auch für Medienströme auf RTP/UDP-Basis Staukontrolle zu ermöglichen. Gemäß einer weiteren bevorzugten Ausführungsform der Erfindung, deren Merkmale auch mit Merkmalen anderer Ausführungsformen kombiniert werden können, ist es vorgesehen, dass für jede Slave-Baugruppe die Frequenz-Differenz und die Phasen-Differenz zwischen dem von dieser Slave-Baugruppe ausgesendeten Paketstrom und dem Paketstrom der Master-Baugruppe ermittelt wird.

Gemäß einer weiteren bevorzugten Ausführungsform der Erfindung, deren Merkmale auch mit Merkmalen anderer Ausführungsformen kombiniert werden können, ist es vorgesehen, dass Taktsignal-Pakete mit höherer Priorität gegenüber anderen Paketen, insbesondere gegenüber anderen Signalisierungspaketen im Netzwerk befördert werden.

Im Folgenden wird die Erfindung anhand bevorzugter Ausführungsbeispiele und mithilfe von Figuren näher beschrieben.

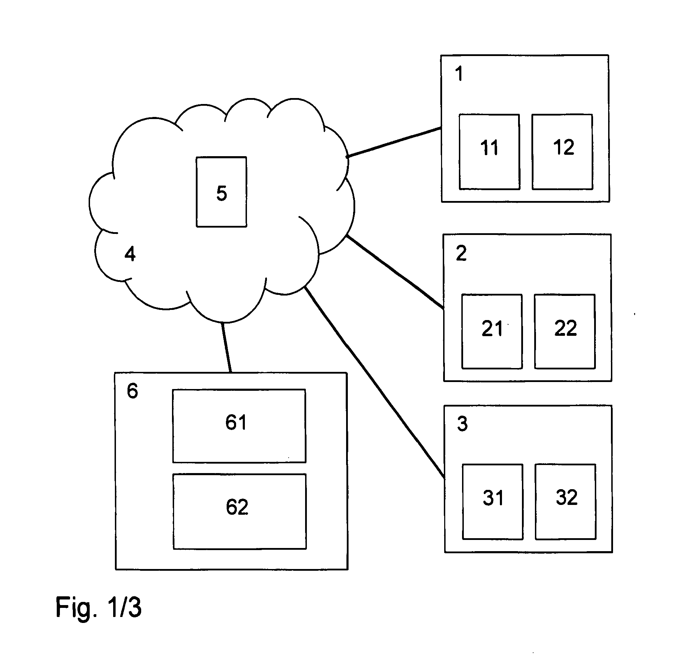

Dabei zeigt
- Figur 1: in schematischer Weise ein bevorzugtes Ausführungsbeispiel einer erfindungsgemäßen Anordnung;

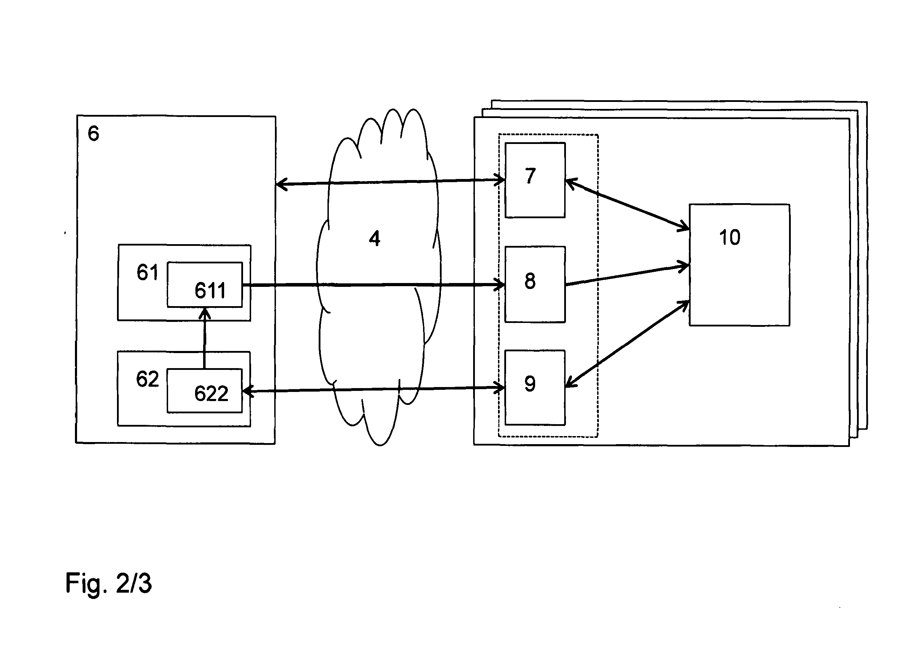

- Figur 2: in schematischer Weise die Signalisierung gemäß einer bevorzugten Ausführungsform der Erfindung;
- Figur 3: in schematischer Weise den Paketstrom gemäß einer bevorzugten Ausführungsform der Erfindung.

Bei den in den Figuren gezeigten Ausführungsformen der Erfindung ist jede Peripheriebaugruppe 10, 12, 22, 32 über eine lokale Steuereinheit (SE) 11, 21, 31 über einen LAN-Switch (LS) 5 mit einem zentralen Steuerrechner (SR) 6 verbunden. Die Peripheriebaugruppe und die lokale Steuereinheit bilden zusammen vorzugsweise jeweils ein Modul 1, 2, 3, welches beispielsweise Bündel von dedizierten Telekommunikationsschnittstellen realisiert.

Die zur zentralen Steuerung der Baugruppen vorzugsweise eingesetzte Software lässt sich grob in zwei Komplexe unterteilen: ein erster Komplex dient der Signalisierung; ein zweiter Komplex dient dem Media Processing. Die Signalisierung ist vorzugsweise Bestandteil einer Gateway Applikation (GA) 61; das Media Processing geschieht vorzugsweise in einem von der Gateway Applikation gesteuerten Media Server (MS) 62.

Jede Steuereinheit 11,21,31 verfügt vorzugsweise über einen in seiner Frequenz variierbaren Quarzoszillator (VCXO) 8, der vorzugsweise über eine Software und einen Digital-Analog-Wandler gesteuert wird. Die Taktsynchronisation wird durch ein Master-Slave-Verfahren realisiert, bei dem alle Module bis auf das zum Taktmaster erklärte Modul ihren lokalen Takt auf den Mastertakt regeln.

Die einzelnen PCM-Kanäle werden gebündelt über das Netzwerk 4, vorzugsweise ein Local Area Network (LAN), vorzugsweise in Form von RTP-Paketen gesendet. Die Senderate ist vorzugsweise ein fest vorgegebener Wert, der vorzugsweise von der Anzahl der Kanäle sowie von der gewählten Paketgröße abhängt. Bei getesteten Prototypen wurde beispielsweise eine Rate von 400 Paketen pro Sekunde gewählt. Das Versenden dieser Pakete geschieht vorzugsweise synchron zum PCM-Takt.

Die Softwarealgorithmen zur Regelung der Slave-Baugruppen befinden sich zum Teil auf dem zentralen Media Server 62, zum Teil in der Gateway Applikation 61. Für jede Slave-Baugruppe wird vorzugsweise die Frequenz-Differenz und bzw. oder die Phasen-Differenz zwischen ihrem Paketstrom und dem Paketstrom der Master-Baugruppe ermittelt 622. Aus diesen Differenzen als Ist-Wert kann die Steuerinformation 611 zur Nachregelung der VCXO-Takt-Oszillatoren auf eine Slave-Baugruppe ermittelt werden.

Bei der Messung der Frequenz- und Phasen-Diffferenz kann es durch hoch sporadische Verzögerungen im Betriebssystem des Steuerrechhers 6 zu vereinzelt falschen Werten kommen. Diese können mit Hilfe einer adaptiven Plausibilitätsprüfung erkannt und verworfen werden. Beispielsweise sind die im eingeschwungenen Zustand möglichen Änderungen in der Phasendifferenz auf die Temperaturdrift des VCXO 8 beschränkt. Die maximal auftretende Differenz kann abgeschätzt werden und alle Messwerte, die eine höhere Differenz vortäuschen, können leicht ausgesondert werden.

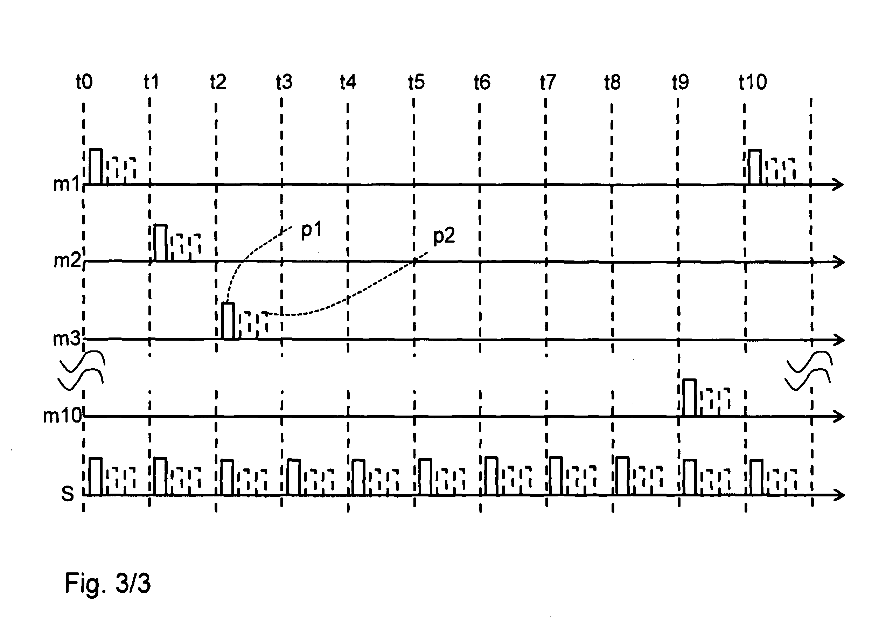

Normalerweise werden die gesendeten Pakete im LAN-Switch 5 stochastisch verzögert. Bei zufällig entstehenden Pakethäufungen von N Paketen (sogenannten "Bursts") können bei Ausnutzung einer maximalen Paketgröße von 1518 Byte und einer Übertragungsrate von beispielsweise 100 Mbit/s Verzögerungen von N mal 121 µs, bzw. N mal 12 µs bei einem Gigabit-Ethemet, auftreten. Diese Verzögerungen stören die Taktsynchronisation. Deshalb wird die Phasenregelung vorzugsweise so modifiziert, dass jede Peripheriebaugruppe m1, m2, m3, ..., m10 ihre RTP-Pakete p1 in einem bestimmten Zeitfenster t0, t1, t2, ... , t10 aussendet. Damit werden PaketHäufungen (Bursts) und die daraus resultierenden Verzögerungen im LAN-Switch 5 von vornherein unterbunden. Andere LAN-Pakete p2, beispielsweise UDP-Pakete, die zum Beispiel der Signalisierung 7 oder der Steuerung dienen, werden nachrangig unmittelbar hinter den RTP-Paketen ausgesendet, so dass genügend Abstand zum nächsten RTP-Paket verbleibt. Die untere Achse der Figur 3 zeigt schematisch den gemultiplexten Paketstrom hinter dem LAN-Switch 5 zum Mediaserver 62.

Ein wesentlicher Gedanke der Erfindung besteht darin, die dem LAN-Switch 5 angebotenen Pakete zeitlich so zu positionieren, dass sonst unvermeidliche stochastische Verzögerungen gar nicht erst entstehen können. Hierdurch entfällt die Notwendigkeit, aufwändige Verfahren, wie beispielsweise unter IEEE 1588 spezifiziert anwenden zu müssen. Dies hat die vorteilhafte Folge, dass standardisierte Hardware- und Software-Komponenten in den LAN Schnittstellen verwendet werden können, was erhebliche Kostenvorteile bedeutet.

## Patentansprüche

1. Verfahren zur Taktsynchronisation einer Mehrzahl von verteilten, über ein paketvermitteltes Netzwerk (4) gekoppelten Baugruppen (12, 22, 32) eines informationstechnischen oder kommunikationstechnischen Systems, bei dem
a) wenigstens zwei dieser Baugruppen von einem lokalen Taktgenerator dieser Baugruppe mit einer einstellbaren Frequenz gesteuert werden und ein Taktsignal über das Netzwerk in Form von Taktsignal-Paketen synchron zu ihrem lokalen Takt senden, wobei das Taktsignal wenigstens ein Puls-Code-Modulations-Signal umfasst, welches in Form von Paketen synchron zum Takt des Puls-Code-Modulations-Signals über das Netzwerk gesendet wird;
b) eine dieser wenigstens zwei Baugruppen die Funktion einer Master-Baugruppe übernimmt, auf deren Takt alle übrigen dieser wenigstens zwei Baugruppen, die Slave-Baugruppen, ihren lokalen Takt synchronisieren, indem sie ein Maß für die Abweichung ihres lokalen Taktgenerators relativ zu dem Taktgenerator der Master-Baugruppe durch einen Vergleich des durch die Master-Baugruppe ausgesendeten Taktsignals mit ihrem eigenen Taktsignal ermitteln und zur Regelung ihres lokalen Taktgenerators verwenden;
**dadurch gekennzeichnet, dass** jede einzelne dieser wenigstens zwei Baugruppen ihre Taktsignal-Pakete in einem Zeitfenster aussendet, das verschieden ist von dem Zeitfenster aller anderen dieser wenigstens zwei Baugruppen.

2. Verfahren nach Anspruch 1, **dadurch gekennzeichnet, dass** jeder Baugruppe eine lokale Steuereinheit (11, 21, 31) zugeordnet wird, die über das Netzwerk (4) mit einem zentralen Steuerrechner (6) verbunden wird.

3. Verfahren nach Anspruch 2, **dadurch gekennzeichnet, dass** jede lokale Steuereinheit einen Quarzoszillator (8) mit einstellbarer Frequenz aufweist, welcher vorzugsweise von einem Programm über einen Digital-Analog-Wandler gesteuert wird.

4. Verfahren nach einem der vorhergehenden Ansprüche, **dadurch gekennzeichnet, dass** das Taktsignal nach dem Real-Time-Transport-Protokoll über das Netzwerk gesendet wird.

5. Verfahren nach einem der vorhergehenden Ansprüche, **dadurch gekennzeichnet, dass** für jede Slave-Baugruppe die Frequenz-Differenz und die Phasen-Differenz zwischen dem von dieser Slave-Baugruppe ausgesendeten Paketstrom und dem Paketstrom der Master-Baugruppe ermittelt (622) wird.

6. Verfahren nach einem der vorhergehenden Ansprüche, **dadurch gekennzeichnet, dass** Taktsignal-Pakete mit höherer Priorität gegenüber anderen Paketen, insbesondere gegenüber anderen Signalisierungspaketen im Netzwerk befördert werden.

7. Anordnung umfassend eine Mehrzahl von verteilten Baugruppen (12, 22, 32) eines informationstechnischen oder kommunikationstechnischen Systems, wobei die Baugruppen über ein paketvermitteltes Netzwerk (4) gekoppelt sind, wobei
a) wenigstens zwei dieser Baugruppen dazu eingerichtet sind, von einem lokalen Taktgenerator dieser Baugruppe mit einer einstellbaren Frequenz gesteuert zu werden und ein Taktsignal über das Netzwerk in Form von Taktsignal-Paketen synchron zu ihrem lokalen Takt zu senden, wobei das Taktsignal wenigstens ein Puls-Code-Modulations-Signal umfasst, welches in Form von Paketen synchron zum Takt des Puls-Code-Modulations-Signals über das Netzwerk gesendet wird;
b) eine dieser wenigstens zwei Baugruppen dazu eingerichtet ist, die Funktion einer Master-Baugruppe zu übernehmen, auf deren Takt alle übrigen dieser wenigstens zwei Baugruppen, die Slave-Baugruppe(n), ihren lokalen Takt synchronisieren, indem sie ein Maß für die Abweichung ihres lokalen Taktgenerators relativ zu dem Taktgenerator der Master-Baugruppe durch einen Vergleich des durch die Master-Baugruppe ausgesendeten Taktsignals mit ihrem eigenen Taktsignal ermitteln und zur Regelung ihres lokalen Taktgenerators verwenden;
**dadurch gekennzeichnet, dass** die Baugruppen (12, 22, 32) so eingerichtet sind, dass jede einzelne dieser Baugruppen ihre Taktsignal-Pakete in einem Zeitfenster aussendet, das verschieden ist von dem Zeitfenster aller anderen dieser Baugruppen.

8. Anordnung nach Anspruch 7, **dadurch gekennzeichnet, dass** ein zentraler Steuerrechner sowie für jede Baugruppe eine ihr zugeordnete lokale Steuereinheit vorgesehen ist, die über das Netzwerk mit dem zentralen Steuerrechner verbunden ist.

9. Anordnung nach Anspruch 8, **dadurch gekennzeichnet, dass** jede lokale Steuereinheit einen Quarzoszillator mit einstellbarer Frequenz aufweist, welcher vorzugsweise von einem Programm über einen Digital-Analog-Wandler gesteuert ist.

10. Anordnung nach einem der Ansprüche 7 bis 9, **dadurch gekennzeichnet, dass** eine Einrichtung für die Ermittlung, für jede Slave-Baugruppe, der Frequenz-Differenz und der Phasen-Differenz zwischen dem von dieser Slave-Baugruppe ausgesendeten Paketstrom und dem Paketstrom der Master-Baugruppe vorgesehen ist.

## Claims

1. Method for clock synchronization of a plurality of distributed modules (12, 22, 32) of an information technology or communication technology system, which are coupled via a packet switched network (4), in which
a) at least two of these modules are controlled by a local clock generator of this module with an adjustable frequency and send a clock signal via the network in the form of clock signal packets synchronously with their local clock, wherein the clock signal comprises at least one pulse code modulation signal, which is sent in the form of packets synchronously with the clock of the pulse code modulation signal via the network;
b) one of these at least two modules takes over the function of a master module, to the clock of which all the other of these at least two modules, the slave modules, synchronize their local clock, by determining a measure for the deviation of their local clock generator relative to the clock generator of the master module by means of a comparison of the clock signal sent by the master module with their own clock signal and using it for the regulation of their local clock generator;
**characterized in that** each individual of these at least two modules sends its clock signal packets in a time window which is different from the time window of all the other of these at least two modules.

2. Method according to Claim 1, **characterized in that** each module is associated with a local control unit (11, 21, 31), which is connected via the network (4) to a central control computer (6).

3. Method according to Claim 2, **characterized in that** each local control unit comprises a quartz oscillator (8) with adjustable frequency, which is preferably controlled by a program via a digital analog converter.

4. Method according to any one of the preceding claims, **characterized in that** the clock signal is transmitted in accordance with the real time transport protocol via the network.

5. Method according to any one of the preceding claims, **characterized in that** for each slave module, the frequency difference and the phase difference between the packet stream sent by this slave module and the packet stream of the master module are determined (622).

6. Method according to any one of the preceding claims, **characterized in that** clock signal packets with higher priority compared to other packets, in particular compared to other signaling packets, are conveyed in the network.

7. Arrangement comprising a plurality of distributed modules (12, 22, 32) of an information technology or communication technology system, wherein the modules are coupled via a packet switched network (4), wherein
a) at least two of these modules are set up to be controlled by a local clock generator of this module with an adjustable frequency and to transmit a clock signal via the network in the form of clock signal packets synchronously with their local clock, wherein the clock signal comprises at least one pulse code modulation signal, which is transmitted in the form of packets synchronously with the clock of the pulse code modulation signal via the network;
b) one of these at least two modules is set up to take over the function of a master module, to the clock of which all the other of these at least two modules, the slave group(s), synchronize their local clock, by determining a measure for the deviation of their local clock generator relative to the clock generator of the master module by means of a comparison of the clock signal sent by the master module with their own clock signal and using it for the regulation of their local clock generator;
**characterized in that** the modules (12, 22, 32) are set up so that each individual one of these modules sends its clock signal packets in a time window which is different from the time window of all the other of these modules.

8. Arrangement according to Claim 7, **characterized in that** a central control computer is provided and a local control unit is provided for each module associated with it, control unit which is connected via the network to the central control computer.

9. Arrangement according to Claim 8, **characterized in that** each local control unit comprises a quartz oscillator with adjustable frequency, which preferably is controlled by a program via a digital analog converter.

10. Arrangement according to any one of Claims 7 to 9, **characterized in that** a device is provided for the determination, for each slave module, of the frequency difference and the phase difference between the packet stream sent by this slave module and the packet stream of the master module.

## Revendications

1. Procédé de synchronisation d'horloge d'une pluralité de modules (12, 22, 32) répartis, couplés par un réseau (4) à commutation de paquets d'un système technique d'information ou de communication, pour lequel
a) au moins deux de ces modules sont commandés par un générateur d'horloge locale de ces modules avec une fréquence réglable et émettent un signal d'horloge sur le réseau sous la forme de paquets de signal d'horloge de manière synchrone à leur horloge locale, le signal d'horloge comportant au moins un signal de modulation par impulsion et codage qui est émis sous la forme de paquets de manière synchrone à l'horloge du signal de modulation par impulsion et codage sur le réseau ;
b) l'un de ces au moins deux modules assure la fonction d'un module maître, sur l'horloge duquel tous les modules restants de ces au moins deux modules, les modules esclaves, synchronisent leur horloge locale en ce qu'ils déterminent une mesure pour l'écart de leur générateur d'horloge locale par rapport au générateur d'horloge du module maître par une comparaison du signal d'horloge émis par le module maître avec leur propre signal d'horloge et l'utilisent pour la régulation de leur générateur d'horloge locale ;
**caractérisé en ce que** chaque module individuel de ces au moins deux modules émet ses paquets de signal d'horloge dans une fenêtre de temps qui est différente de la fenêtre de temps de tous les autres modules de ces au moins deux modules.

2. Procédé selon la revendication 1, **caractérisé en ce qu'**à chaque module est associée une unité de commande locale (11, 21, 31) qui est reliée par le réseau (4) à un ordinateur de commande central (6).

3. Procédé selon la revendication 2, **caractérisé en ce que** chaque unité de commande locale présente un oscillateur piézoélectrique (8) avec une fréquence réglable qui est commandé de préférence par un programme via un convertisseur numérique-analogique.

4. Procédé selon l'une quelconque des revendications précédentes, **caractérisé en ce que** le signal d'horloge est émis selon le protocole de transport en temps réel par le réseau.

5. Procédé selon l'une quelconque des revendications précédentes, **caractérisé en ce que** la différence de fréquence et la différence de phase entre le courant de paquet émis par ce module esclave et le courant de paquet du module maître sont déterminées (622) pour chaque module esclave.

6. Procédé selon l'une quelconque des revendications précédentes, **caractérisé en ce que** des paquets de signal d'horloge sont transportés avec une priorité plus élevée par rapport à d'autres paquets, en particulier par rapport à d'autres paquets de signalisation dans le réseau.

7. Agencement comprenant une pluralité de modules répartis (12, 22, 32) d'un système technique d'information ou de communication, les modules étant couplés par un réseau (4) à commutation de paquets,
a) au moins deux de ces modules étant aménagés afin d'être commandés par un générateur d'horloge locale de ces composants avec une fréquence réglable et afin d'émettre un signal d'horloge sur le réseau sous la forme de paquets de signal d'horloge de manière synchrone à leur horloge locale, le signal d'horloge comportant au moins un signal de modulation par impulsion et codage qui est émis sous la forme de paquets de manière synchrone à l'horloge du signal de modulation par impulsion et codage sur le réseau ;
b) l'un de ces au moins deux modules étant aménagé afin d'assurer la fonction d'un module maître, sur l'horloge duquel tous les modules restants de ces au moins deux modules, le(s) module(s) esclave(s), synchronisent leur horloge locale en ce qu'ils déterminent une mesure pour l'écart de leur générateur d'horloge locale par rapport au générateur d'horloge du module maître par une comparaison du signal d'horloge émis par le module maître avec leur signal d'horloge propre et l'utilisent pour la régulation de leur générateur d'horloge locale ;
**caractérisé en ce que** les modules (12, 22, 32) sont aménagés de sorte que chaque module individuel de ces modules émette ses paquets de signal d'horloge dans une fenêtre de temps qui est différente de la fenêtre de temps de tous les autres modules de ces modules.

8. Agencement selon la revendication 7, **caractérisé en ce qu'**un ordinateur de commande central ainsi que pour chaque module, une unité de commande locale qui lui est associée sont prévus, laquelle est reliée par le réseau à l'ordinateur de commande central.

9. Agencement selon la revendication 8, **caractérisé en ce que** chaque unité de commande locale présente un oscillateur piézoélectrique avec une fréquence de réglage qui est de préférence commandée par un programme via un convertisseur numérique-analogique.

10. Agencement selon l'une quelconque des revendications 7 à 9, **caractérisé en ce qu'**un dispositif pour la détermination, pour chaque module esclave, de la différence de fréquence et de la différence de phase entre le courant de paquet émis par ce module esclave et le courant de paquet du module maître est prévu.
